# EUROPÄISCHE PATENTSCHRIFT

(11) **EP 1 827 884 B1**
(45) Veröffentlichungstag und Bekanntmachung des Hinweises auf die Patenterteilung: **29.04.2009**
(21) Anmeldenummer: 05848212.6
(22) Anmeldetag: 06.12.2005
(51) Int. Cl.: B60J 7/02

(54) **CABRIOLET-FAHRZEUG MIT EINEM SEPARAT ÖFFNUNGSFÄHIGEN DACHTEIL**
CONVERTIBLE VEHICLE WITH A ROOF PART THAT IS CAPABLE OF OPENING SEPARATELY
CABRIOLET POURVU D'UNE PARTIE TOIT POUVANT ETRE OUVERTE SEPAREMENT

(30) Priorität: 16.12.2004 DE 102004060504
(43) Veröffentlichungstag der Anmeldung: 05.09.2007
(73) Patentinhaber: Wilhelm Karmann GmbH, 49084 Osnabrück (DE)
(72) Erfinder: BUNSMANN, Winfried, 49143 Bissendorf (DE); RUSSKE, Klaus, 49143 Bissendorf (DE)
(86) Internationale Anmeldenummer: PCT/DE2005/002191
(87) Internationale Veröffentlichungsnummer: WO 2006/063557

(56) Entgegenhaltungen:
- EP-A- 0 312 990
- DE-A1- 10 211 860
- US-A- 4 852 938
- PATENT ABSTRACTS OF JAPAN Bd. 015, Nr. 310 (M-1144), 8. August 1991 (1991-08-08) -& JP 03 114925 A (MAZDA MOTOR CORP), 16. Mai 1991 (1991-05-16)

## Beschreibung

Die Erfindung betrifft ein Cabriolet-Fahrzeug mit zumindest einem separat öffnungsfähigen Dachteil nach dem Oberbegriff des Anspruchs 1.

Aus der DE 42 03 229 C2 und JP03114925 ist ein Cabriolet-Fahrzeug bekannt, das einen hinteren, eine Heckscheibe umfassenden Dachabschnitt und einen oder zwei in Fahrtrichtung bei geschlossenem Dach vor diesem liegende Dachabschnitt(e) umfaßt. Die vorderen Dachabschnitte weisen jeweils ein bezüglich der Fahrzeugquerrichtung mittleres, separat öffnungsfähiges Teil auf, das seitlich von Längsrahmen eingefaßt ist. Zur Öffnung eines solchen Teils ist dieses heckwärts verschieblich. Dabei dienen die seitlich außen angeordneten Längsrahmen wie bei einem herkömmlichen Schiebedach als Führungen für das mittlere Teil und bleiben somit unbewegt stehen. Dadurch ist das Freiluftgefühl beeinträchtigt, und für die Insassen ergibt sich mehr der Eindruck eines großen Schiebedachs als der einer Öffnung nach Art eines Targa-fahrzeugs. Die seitlichen Längsrahmen sind nur aus dieser Stellung entfernbar bei vollständiger Dachöffnung nach Art eines Cabriolet-Fahrzeugs. Hierzu sind jedoch erst das hintere Dachteil betreffende Maßnahmen erforderlich, die nur im Stand des Fahrzeugs durchgeführt werden können, zum Beispiel das Aufschwenken eines Heckdeckels, das Verschwenken der Heckscheibe oder ähnliches. Zudem wird das bewegliche Teil des vorderen Dachabschnitt unter den jeweils dahinter befindlichen Dachabschnitt verfahren, was die Kopffreiheit der Insassen einschränkt.

Die US 4 852 938 A zeigt ein Fahrzeug, das nach Art eines Targa-Fahrzeugs ausgebildet ist und einen festen hinteren Dachbereich sowie einen beweglichen vorderen Dachbereich umfaßt. Der vordere Dachbereich umfaßt einen in der Fahrzeugquermitte über einen Längsholm abgestützten Plattenkörper, der entlang diesem Längsholm nach hinten über den festen Dachteil verlagerbar ist, so daß in Öffnungsstellung der Plattenkörper über dem hinteren Dachteil gelegen ist und damit die Durchsicht durch eine Heckscheibe sowie die Aerodynamik und Optik des Fahrzeugs beeinträchtigt. Eine weitergehende Dachöffnung ist nicht möglich.

Eine ähnliche Lösung ist auch in den Patent Abstracts of Japan, vol. 015, no. 310 in der JP 03-114925 A offenbart.

Der Erfindung liegt das Problem zugrunde, Fahrzeuge der genannten Art hinsichtlich der Dachöffnung zu verbessern.

Die Erfindung löst dieses Problem durch ein Cabriolet-Fahrzeug mit den Merkmalen des Anspruchs 1, Hinsichtlich weiterer vorteilhafter Ausgestaltungen der Erfindung wird auf die weiteren Ansprüche 2 bis 9 verwiesen.

Durch die erfindungsgemäße Ausbildung ist einerseits durch den nur einen Längsträger für den vorderen Dachteil schon ein sehr gutes Freiluftgefühl nur bei Öffnung dieses Dachteils erreicht. Bei geöffneten Seitenscheiben kann sich der dann offene Raum von einer Fensterbrüstungskante der Tür bis weit über die Köpfe der Insassen ohne Unterbrechung erstrecken. Diese Teilöffnung kann während der Fahrt durchgeführt werden. Andererseits ist zudem auch eine Vollcabriolet-Stellung ermöglicht, bei der auch der hintere Dachabschnitt öffnungsfähig und in der Karosserie ablegbar ist.

Es ergeben sich somit verschiedene stabile Fahrstellungen. Die Flexibilität ist erhöht. Zudem kann auch aus der Öffnungsstellung des vorderen Dachteils heraus die Dachöffnung weiter bis zum Erreichen der vollcabriolet-Stellung betrieben werden.

Wenn vorteilhaft der oder jeder öffnungsfähige Teil zumindest in seinem geschlossenen Zustand an einem im Bereich einer vertikalen Fahrzeuglängsmittelebene und zwischen dem Windschutzscheibenrahmen und einem geschlossenen hinteren Dachabschnitt gelegen Längsträger abgestützt ist, ist innerhalb des Raumes, der bei geschlossenem öffnungsfähigen Teil von dem diesen tragenden Dachabschnitt eingenommen wird, außer diesem mittleren Längsträger keinerlei das Freiluftgefühl störendes Bauteil erforderlich.

Die Führung des öffnungsfähigen Teils ist unkompliziert zu realisieren, wenn dieses in seinem geschlossenen Zustand mit seinem vorderen Ende an dem Längsträger und mit seinem hinteren Ende über zumindest eine seiner Queraußenkante nahegelegene Halterung an einem dahinter liegenden Dachabschnitt beweglich abgestützt ist. Die vordere Halterung wirkt einem Abkippen des Teils nach vorne, die hinteren wirken einem Kippen um die Fahrzeuglängsachse entgegen. Durch diese Lagerung des öffnungsfähigen Teils an zumindest drei Punkten wird ein Verzicht auf seitliche Längsrahmenteile des vorderen Dachabschnitts erleichtert.

Eine vollständige Übergabe auch der vorderen Halterung in vollständig offener Stellung an einen dahinter liegenden Dachabschnitt ermöglicht in einfacher und verkantungsfreier Weise die Dachöffnung auch bei komplett geöffnetem separatem Teil.

Dabei kann während der Öffnung des gesamten Daches zur Ablage im rückwärtigen Teil des Cabriolet-Fahrzeugs der Längsträger gegenüber einem dahinter liegenden Dachabschnitt um eine quer zum Fahrzeug gelegene Achse einschwenkbar sein und damit bei abgelegtem Dach in dem durch eine Wölbung des hinteren Dachabschnitts in der Fahrzeugmitte ohnehin vorhandenen Raum ohne Einschränkung des Kofferraums gelagert sein. Das Einschwenken des Längsträgers kann gleichzeitig zur Öffnung des hinteren Dachabschnitts stattfinden, so daß die Zeitdauer für die Dachöffnung nicht vergrößert ist. Außerdem muß die Kopffreiheit der Insassen durch die Simultanbewegung nicht eingeschränkt werden. Hierzu trägt auch bei, daß der Längsträger nur in der vertikalen Mittelebene zwischen den Insassen beweglich ist. Für eine raumsparende Lagerung des vollständig geöffneten Daches ist es insbesondere günstig, wenn bei einer Ausbildung des Daches mit genau zwei aufeinander folgenden Dachabschnitten die Längserstreckung des Längsträgers kleiner ist als die Höhenerstreckung des hinteren Dachabschnitts. Dann sind der Längsträger und der hintere Dachabschnitt parallel zueinander und raumsparend lagerbar, ohne daß der Längsträger den Dachabschnitt überragt.

Das Dach kann in einer vorteilhaften Ausbildung sowohl bei geöffnetem als auch bei geschlossenem öffnungsfähigen Teil insgesamt geöffnet werden, was die Flexibilität erhöht.

Weitere Vorteile und Merkmale der Erfindung ergeben sich aus in der Zeichnung zumindest schematisch dargestellten und nachfolgend beschriebenen Ausführungsbeispielen des Gegenstandes der Erfindung.

In der Zeichnung zeigt:
- Fig. 1: eine teilweise abgebrochene Darstellung eines erfindungsgemäßen Kraftfahrzeugs in perspektivi- scher Ansicht von schräg hinten und oben mit zwei aufeinander folgenden Dachabschnitten in ge- schlossener Stellung,

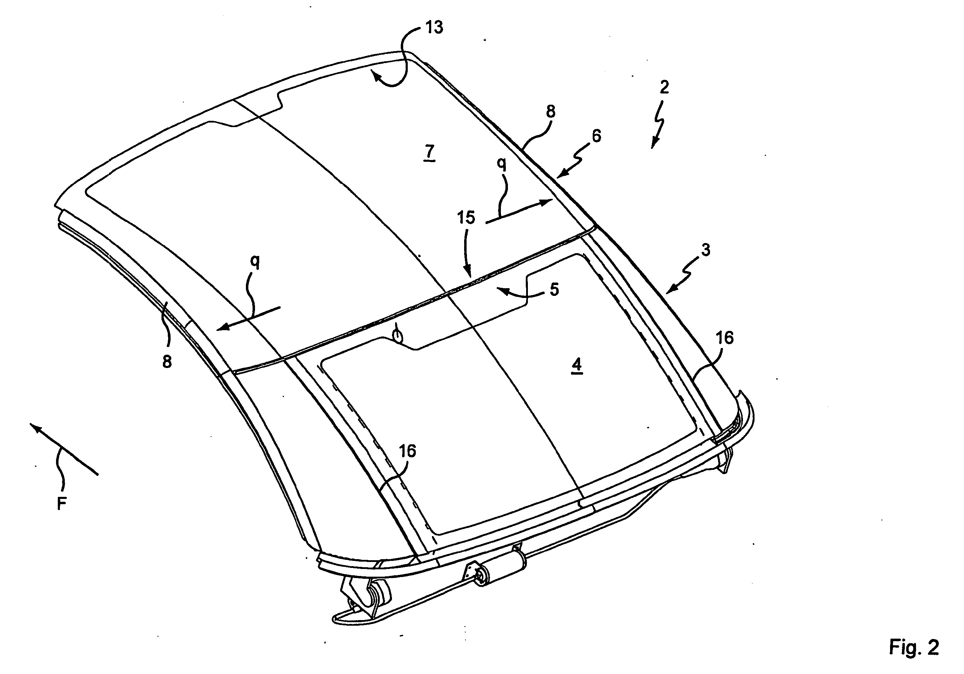

- Fig. 2: das Dach nach Fig. 1 in herausgezeichneter Dar- stellung,

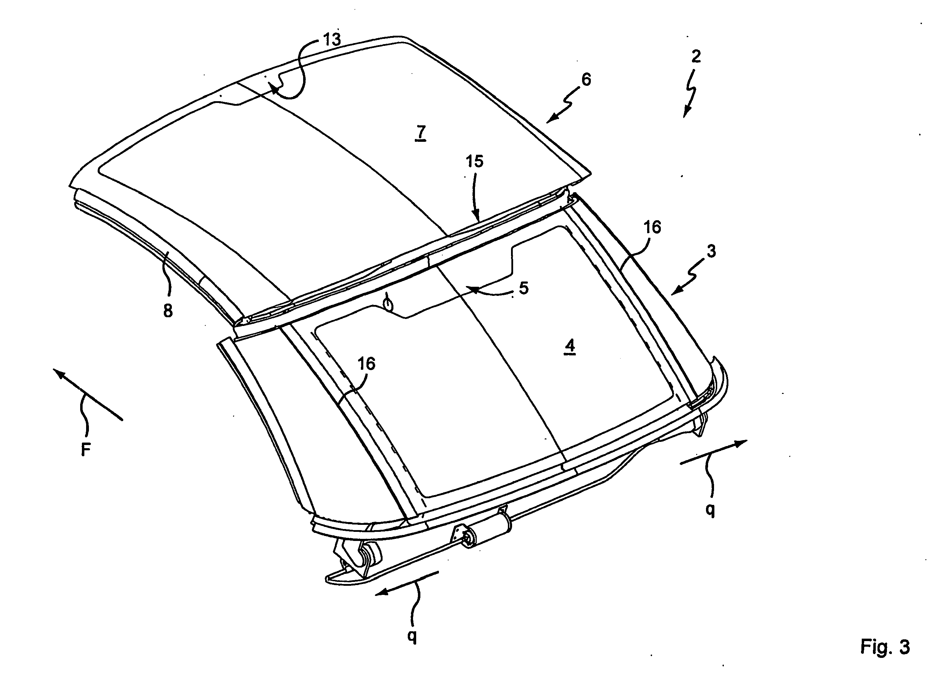

- Fig. 3: eine ähnliche Ansicht wie Fig. 2 bei beginnender Öffnung des separat öffnungsfähigen Teils,
- Fig. 4: eine ähnliche Ansicht wie Fig. 3 während der wei- ter fortschreitenden Öffnung des Teils,
- Fig. 5: eine ähnliche Ansicht wie Fig. 4 bei geöffnetem Teil und noch geschlossenem hinterem Dachab- schnitt,
- Fig. 6: eine ähnliche Ansicht wie Fig. 5 während der Öff- nung des hinteren Dachabschnitts und des Ein- schwenkens des Längsträgers gegenüber diesem zur Erzeugung einer Vollcabriolet-Dachstellung,

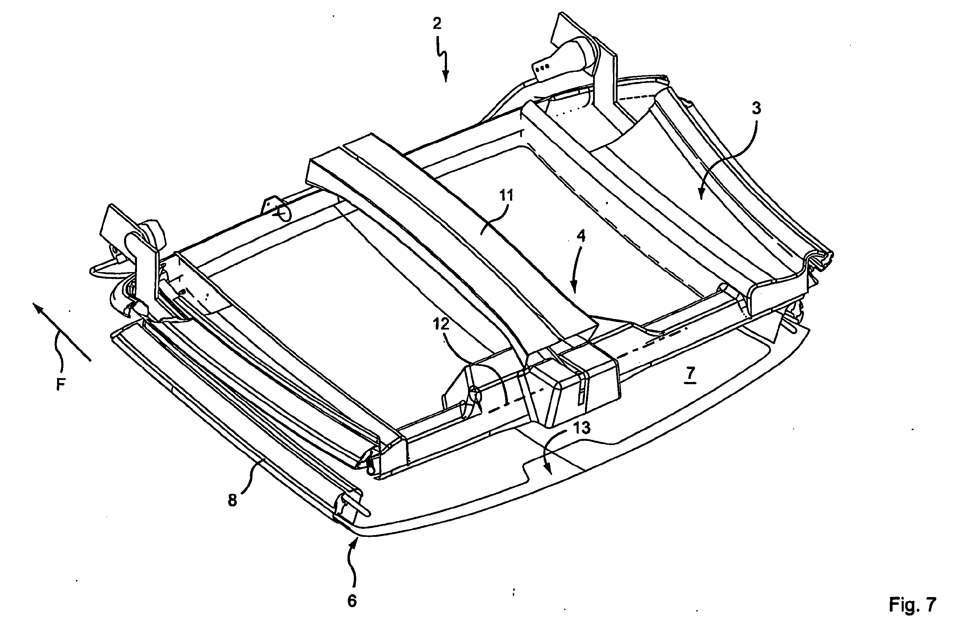

- Fig. 7: eine ähnliche Ansicht wie Fig. 6 bei vollständig abgelegtem Dach mit parallel zueinander gelager- tem hinterem Dachabschnitt und Längsträger,

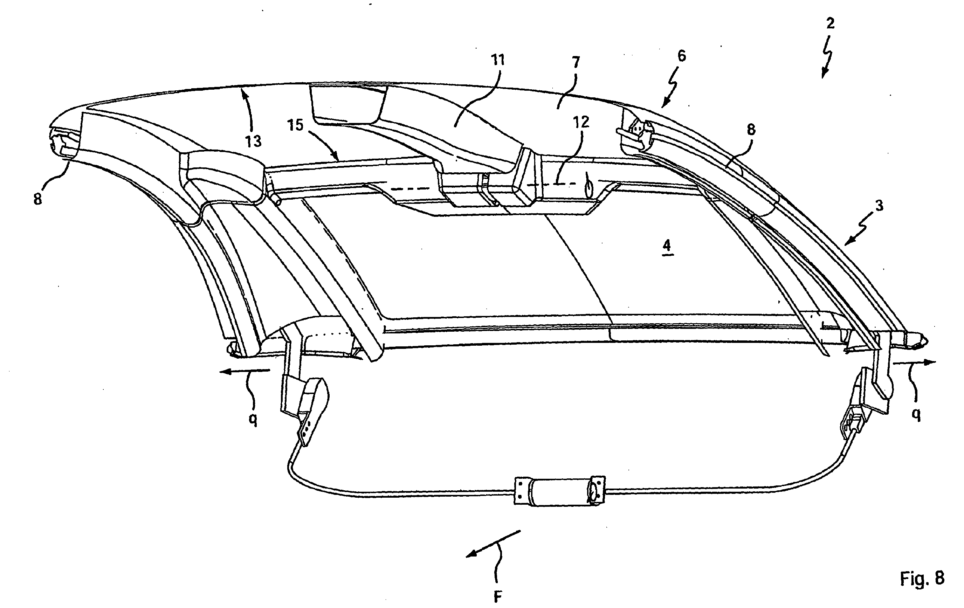

- Fig. 8: das Dach in Stellung nach Fig. 2 in einer von unten, aus Richtung des Fahrzeuginnenraums gese- henen Ansicht,

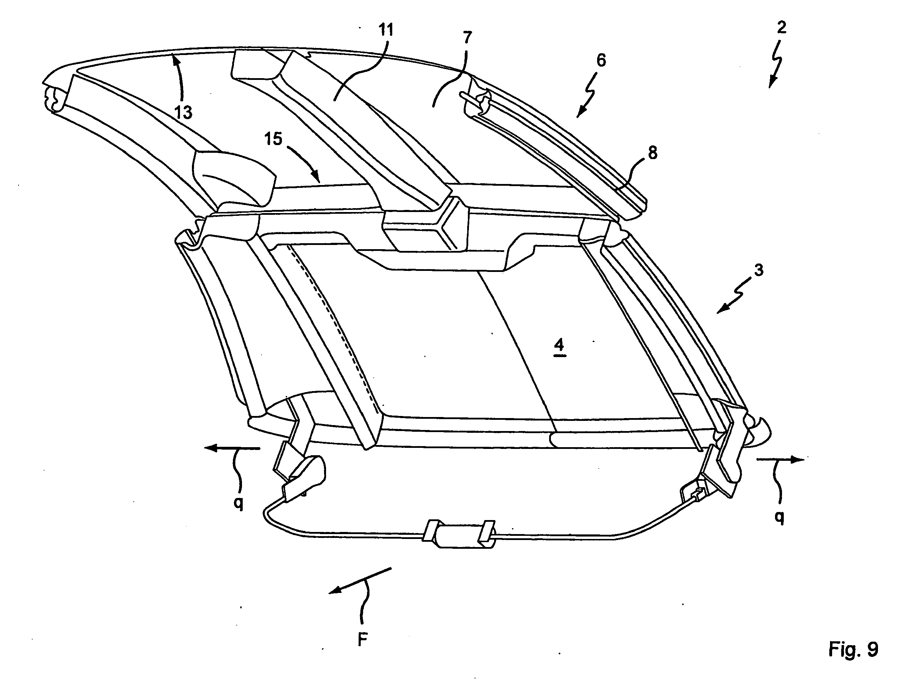

- Fig. 9: eine ähnliche Ansicht wie Fig. 8 bei beginnender Öffnung des separat öffnungsfähigen Teils,

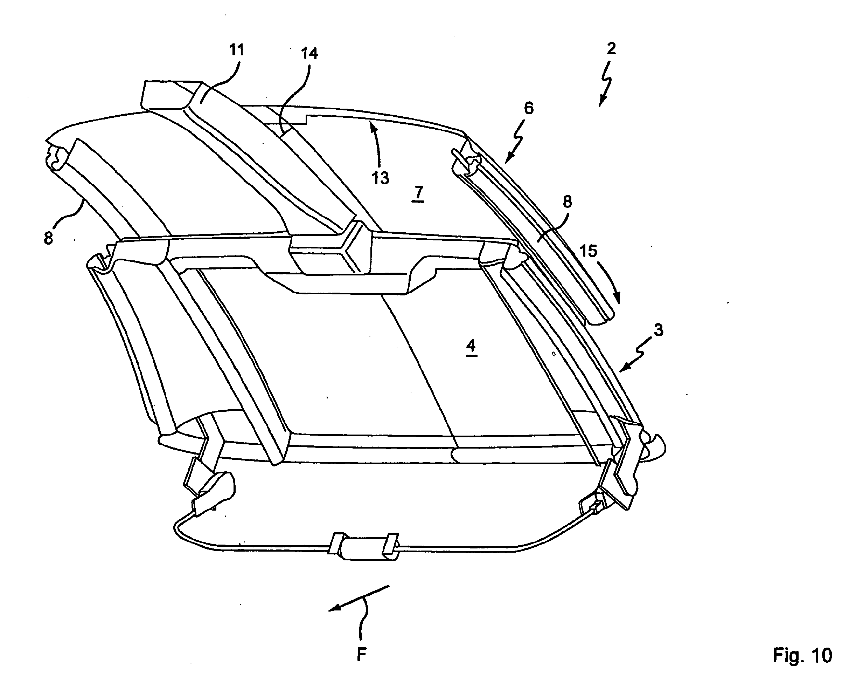

- Fig. 10: eine ähnliche Ansicht wie Fig. 9 während der wei- ter fortschreitenden Öffnung des Teils,

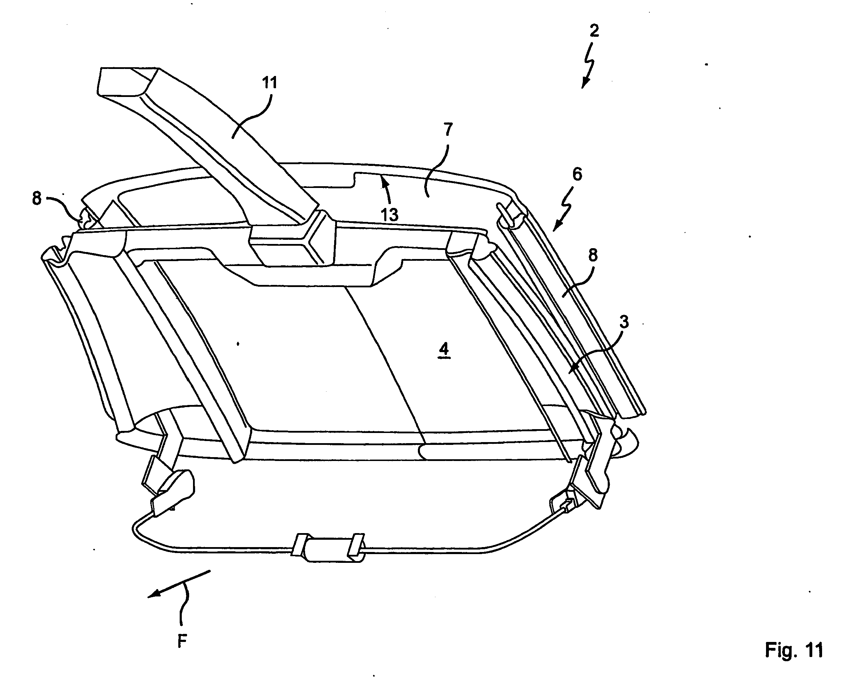

- Fig. 11: eine ähnliche Ansicht wie Fig. 10 bei geöffnetem Teil und noch geschlossenem hinterem Dachab- schnitt,

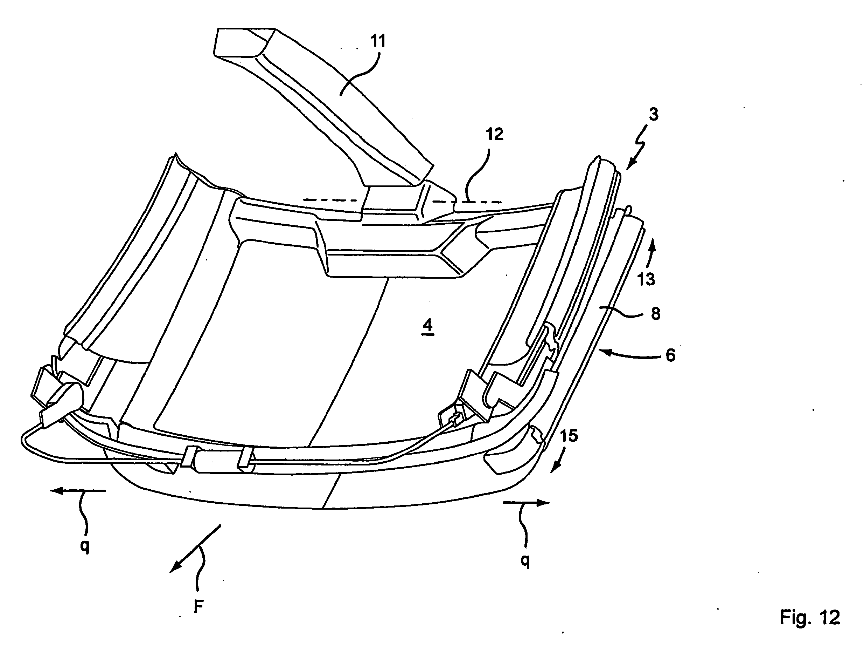

- Fig. 12: eine ähnliche Ansicht wie Fig. 11 während der Öffnung des hinteren Dachabschnitts und des Ein- schwenkens des Längsträgers gegenüber diesem zur Erzeugung einer Vollcabriolet-Dachstellung,

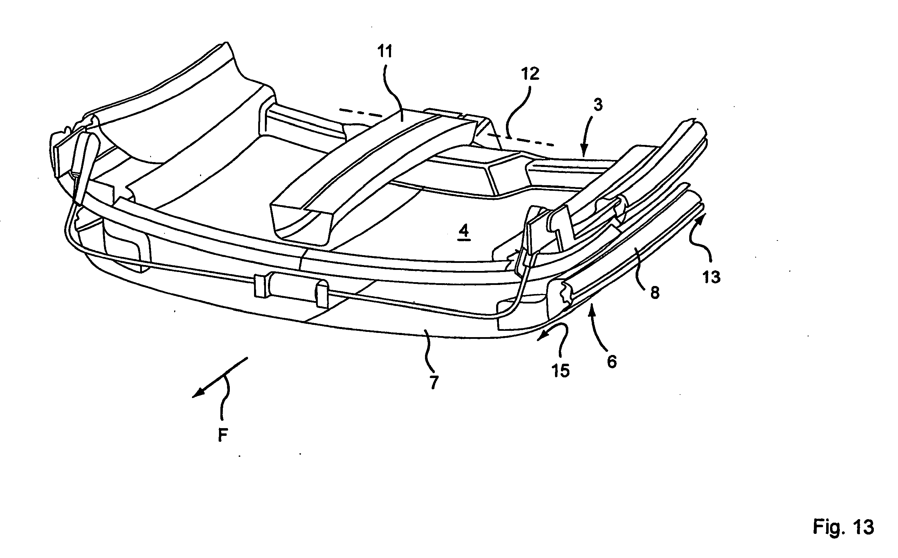

- Fig. 13: eine ähnliche Ansicht wie Fig. 12 bei vollständig abgelegtem Dach mit parallel zueinander gelager- tem hinterem Dachabschnitt und Längsträger,

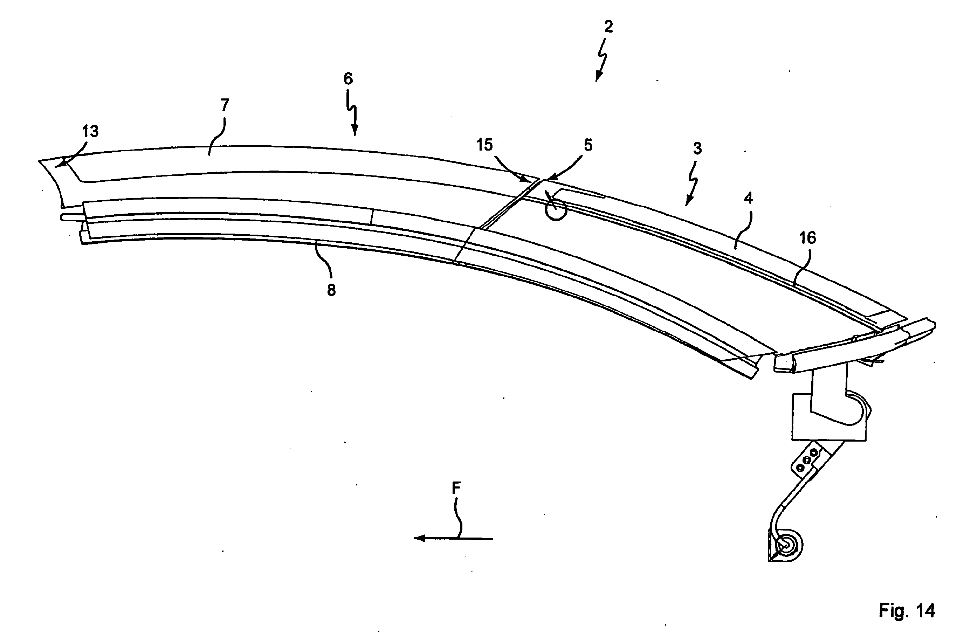

- Fig. 14: das Dach in Stellung nach Fig. 2 in einer von unten, aus Richtung des Fahrzeuginnenraums gese- henen Ansicht,

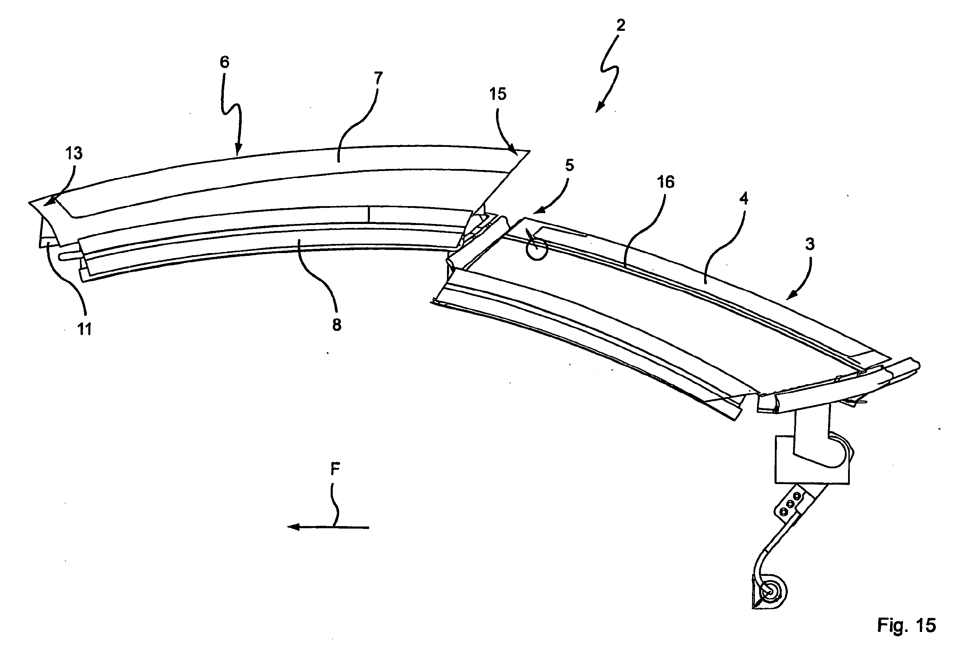

- Fig. 15: eine ähnliche Ansicht wie Fig. 14 bei beginnender Öffnung des separat öffnungsfähigen Teils,

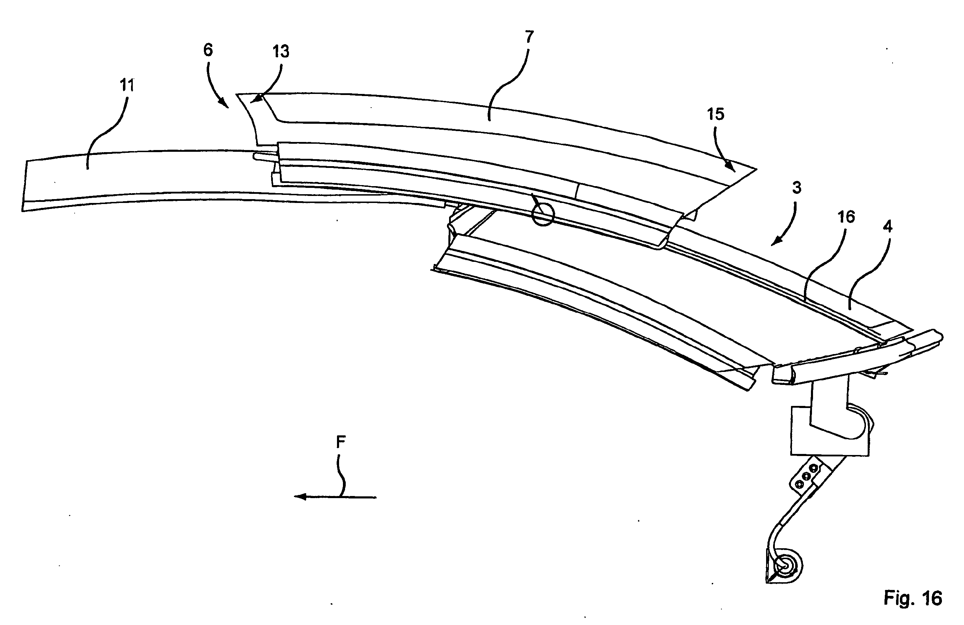

- Fig. 16: eine ähnliche Ansicht wie Fig. 15 während der weiter fortschreitenden Öffnung des Teils,

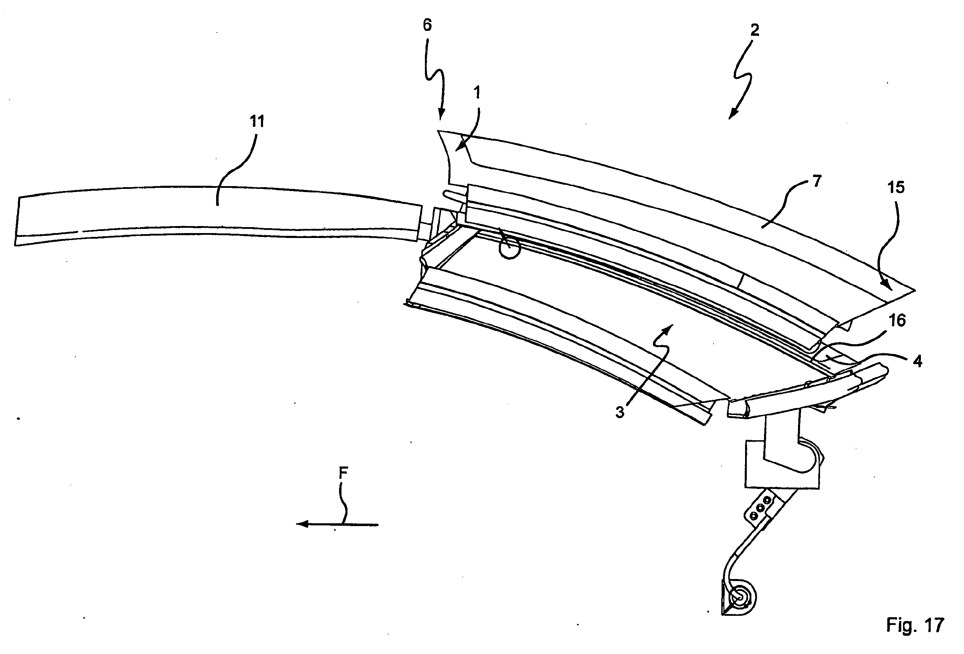

- Fig. 17: eine ähnliche Ansicht wie Fig. 16 bei geöffnetem Teil und noch geschlossenem hinterem Dachab- schnitt,

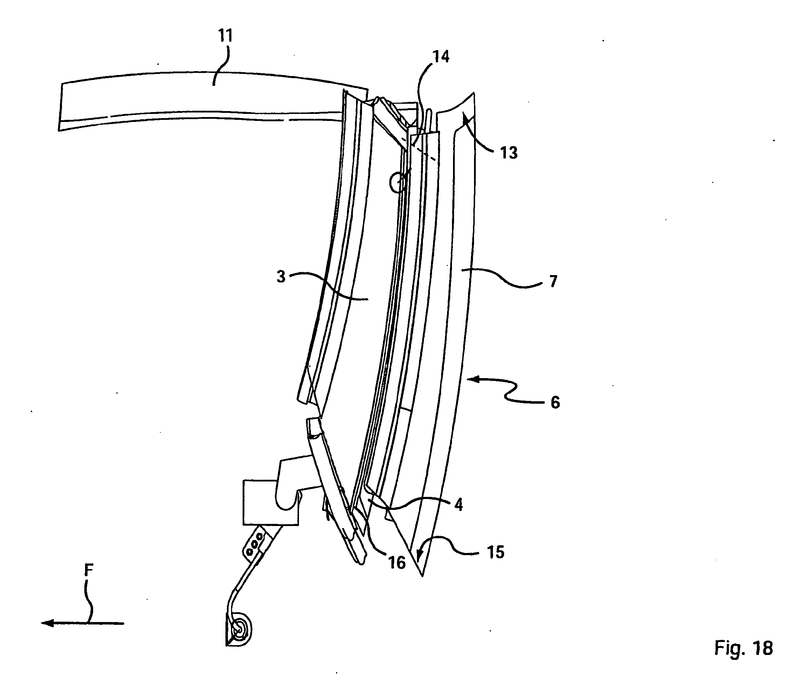

- Fig. 18: eine ähnliche Ansicht wie Fig. 17 während der Öffnung des hinteren Dachabschnitts und des Ein- schwenkens des Längsträgers gegenüber diesem zur Erzeugung einer Vollcabriolet-Dachstellung,

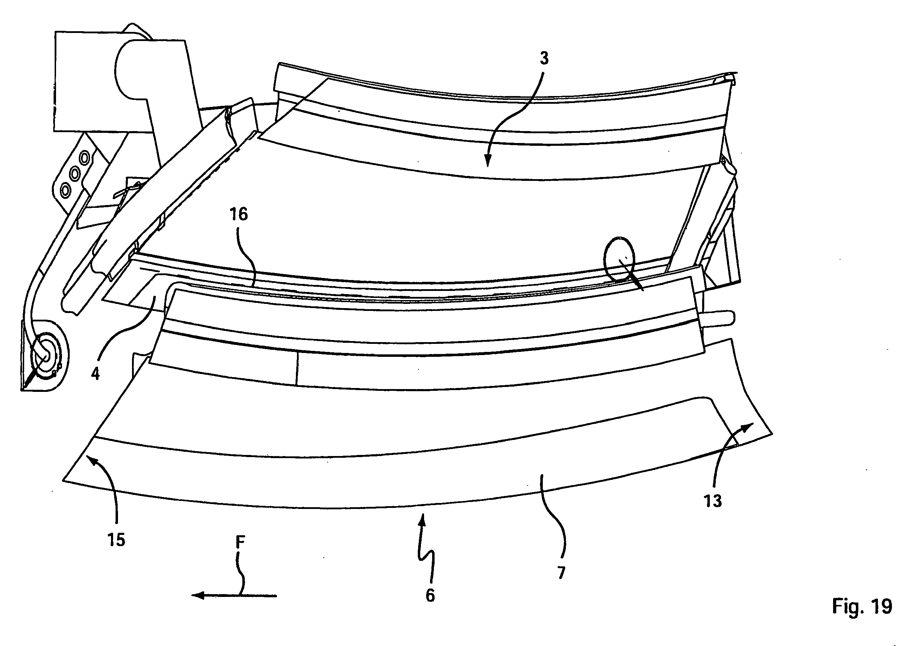

- Fig. 19: eine ähnliche Ansicht wie Fig. 18 bei vollständig abgelegtem Dach mit parallel zueinander gelager- tem hinterem Dachabschnitt und Längsträger.

Das erfindungsgemäße Cabriolet-Fahrzeug 1 kann sowohl, wie hier dargestellt, ein Zweisitzer als auch Vier- oder Mehrsitzer sein.

Es weist ein insgesamt mit 2 bezeichnetes Dach auf, das einerseits zur Erzeugung einer Vollcabriolet-Stellung vollständig öffnungsfähig und andererseits zur Erzeugung einer Zwischenstellung teilweise öffnungsfähig ist.

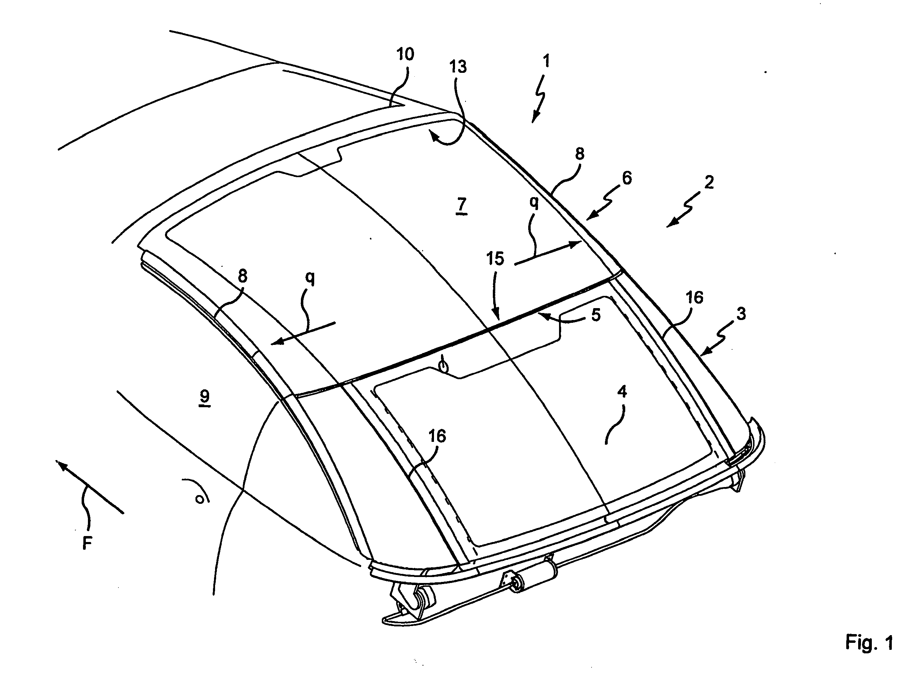

In den gezeichneten Ausführungsbeispielen umfaßt das geschlossene Dach 2 (Fig. 1) in Fahrzeuglängsrichtung hintereinander genau zwei Dachabschnitte, nämlich einen hinteren Dachabschnitt 3 mit einer Heckscheibe 4 und in geschlossener Stellung des hinteren Dachabschnitts 3 an seine vordere Kante 5 unmittelbar anschließend und in Fahrtrichtung F vorgeordnet einen weiteren Dachabschnitt 6. Alternativ können insbesondere bei Vier- und Mehrsitzern auch mehrere Dachabschnitte dem hinteren Dachabschnitt 3 vorgeordnet sein. Der vordere Dachabschnitt 6 liegt im geschlossenen Zustand im wesentlichen horizontal oberhalb des Insassenraums. Die hier zwei Dachabschnitte 3, 6 können aus unterschiedlichen Materialien, etwa metallischen, Glas- oder Kunststoffwerkstoffen, gebildet sein. Insbesondere können sie im wesentlichen transparent ausgebildet sein, so daß sich auch bei geschlossenem Dach 2 ein gutes Raumgefühl ergibt.

Der vordere Dachabschnitt 6 umfaßt zumindest einen separat öffnungsfähigen, hier plattenförmigen Teil 7, der sich hier über die gesamte Innenraumbreite des Fahrzeugs 1 erstreckt und mit seiner in Fahrzeugquerrichtung q liegenden Außenkante 8 unmittelbar an Oberkanten von seitlichen Scheiben 9 angrenzt, sofern diese geschlossen sind.

Dieser öffnungsfähige Teil 7 übergreift dabei in seiner geschlossenen Stellung (z. B. Fig. 1) einen an einem Windschutzscheibenrahmen 10 mittelbar oder unmittelbar lösbar gehaltenen Längsträger 11, der in seinem entgegen der Fahrtrichtung F gelegenen rückwärtigen Ende am hinteren Dachabschnitt 3 um eine horizontale, quer zum Fahrzeug 1 liegende Achse 12 schwenkbar angelenkt ist. Für das Verschwenken um diese Achse 12 kann ein eigener Antrieb, etwa ein Elektromotor, vorgesehen sein, oder diese Schwenkbewegung ist mit dem Hauptantrieb für die Ablagebewegung des hinteren Dachabschnitts 3 gekoppelt. In jedem Fall können beide Bewegungen simultan ablaufen.

In geschlossener und nur wenig geöffneter Stellung ist der öffnungsfähige Plattenteil 7 mit seinem vorderen Ende 13 über zumindest eine Halterung 14 an dem Längsträger 11 geführt. Auch zwei Halterungen nebeneinander an dem Längsträger 11 sind zur Kippstabilisierung möglich. Mit seinem rückwärtigen Ende 15 ist er hingegen an dem rückwärtigen Dachabschnitt 3 in quer außen liegenden Führungsbahnen 16 geführt.

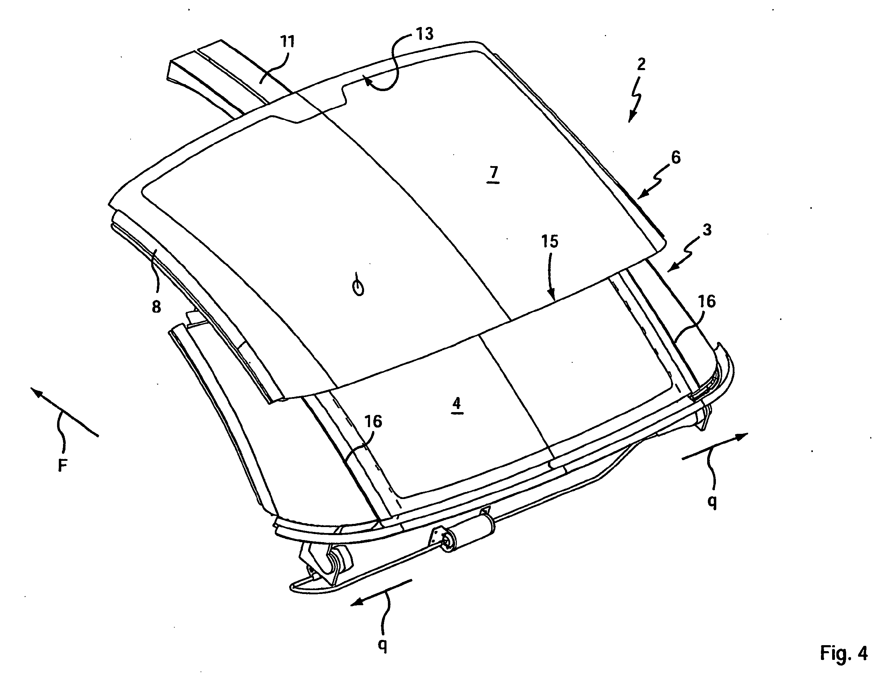

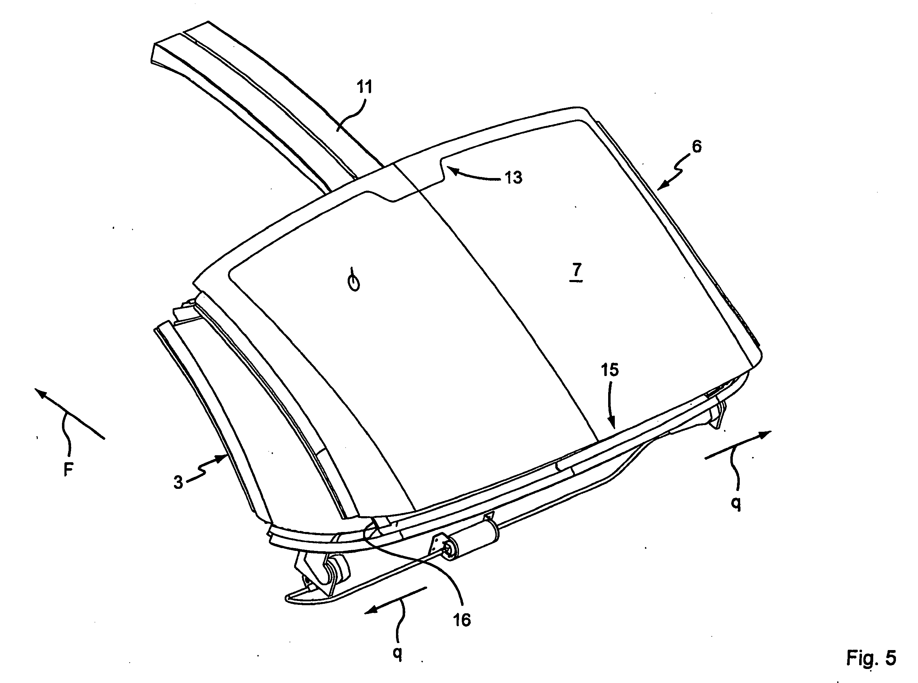

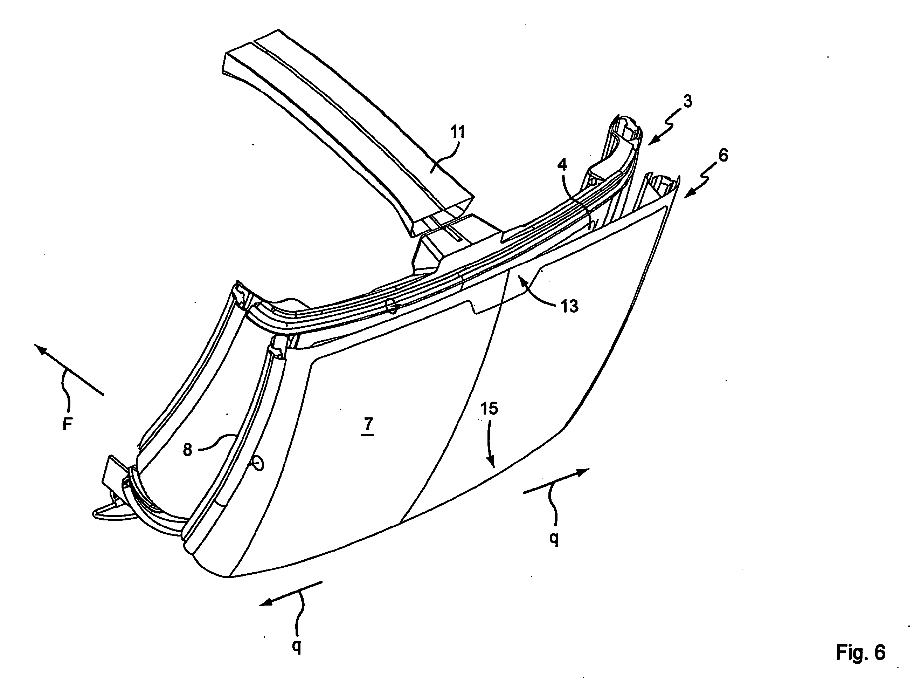

Der öffnungsfähige Teil 7 ist dabei aus der geschlossenen Stellung heraus, in der er fluchtend zur Vorderkante 5 des hinteren Dachabschnitts 3 liegt, hinten aufstellbar und über den dahinter liegenden Dachabschnitt 3 derart verschieblich, daß er in seiner geöffneten Stellung im wesentlichen parallel auf der Heckscheibe 4 liegt (Fig. 4 ff.). Die so gebildete Stellung stellt eine mögliche dauerhafte Fahrstellung dar. Aus ihr heraus kann jedoch auch eine weitere Dachöffnung mit Abwärtsverlagerung der dann als Paket übereinanderliegenden Dachteile 3, 7 erfolgen, um diese innerhalb der Karosserie abzusenken. Bei vollständig geöffnetem Teil 7 ist auch die vordere Halterung 14 an den hinteren Dachabschnitt 3 übergeben, so daß dann der Längsträger 11 keine Haltefunktion mehr für den Teil 7 erfüllt. Der Teil 7 liegt dann bei geschlossenem hinterem Dachabschnitt 3 parallel zu und oberhalb der Heckscheibe 4. Der Längsträger 11 kann dann nach Entriegelung vom Windschutzscheibenrahmen 10 um die Achse 12 einschwenken. Dies kann simultan zur Schwenkbewegung des hinteren Dachabschnitts 3 zu seiner Ablage im Fahrzeug 1 ablaufen, so daß der Längsträger nie weiter als in geschlossener Dachstellung nach unten in den Insassenraum ragt (Fig. 5, Fig. 6). Wenn die Heckscheibe 4 derart gewölbt ist, daß sie in geschlossener Stellung mit ihrem mittleren Bereich weiter nach hinten ragt als mit ihren in Querrichtung q äußeren Rändern, was zumindest bei Stufenheckfahrzeugen üblich ist, wird der einschwenkende Längsträger 11 in der Wölbung des hinteren Dachabschnitts 3 aufgenommen, so daß das Gesamtpaket des abgelegten Dachs 2 eine sehr geringe Dickenerstreckung aufweist und das Stauvolumen des Kofferraums nur wenig einschränkt. Auch die Länge des Dachpakets ist nicht vergrößert, wenn der Längsträger 11 kürzer ist als die Höhenerstreckung des hinteren Dachabschnitts 3 entlang der Ebene der Heckscheibe 4. Der Längsträger 11 kann dann vollständig in der Wölbung aufgenommen sein, was einen besonderen Vorteil hinsichtlich des Packmaßes darstellt.

Wenn der öffnungsfähige Teil 7 direkt an den Windschutzscheibenrahmen 10 anschließt, ist schon in der Zwischenstellung mit nur geöffnetem Teil 7 eine sehr große Dachöffnung nicht nur in Querrichtung bis zu den seitlichen Fensterbrüstungskanten, sondern auch in Längsrichtung zwischen dem Windschutzscheibenrahmen 10 und der Vorderkante 5 des hinteren Dachabschnitts 3 möglich. Eine abgestufte oder stufenlose Bewegung des Teils 7 kann während der Fahrt möglich sein.

Eine nach außen einheitliche und damit optisch sehr vorteilhafte Gestalt des vorderen Dachabschnitts 6 läßt sich erreichen, wenn der Plattenteil 7 den Längsträger 11 übergreift und sich durchgehend einstückig bis zu den Seitenscheiben 9 erstreckt. Auch bei einer im wesentlichen transparenten Ausbildung des Plattenteils 7 können die Randbereiche beispielsweise durch Folien oder Färbung dunkel abgesetzt sein, um den Lichteinfall in den Insassenraum zu begrenzen.

Alternativ können auch nebeneinander zwei einzelne Plattenteile - nicht gezeichnet - vorgesehen sein, die durch den Längsträger 11 voneinander getrennt sind. Diese können auch einzeln bewegbar sein, so daß beispielsweise oberhalb des Fahrers ein Plattenteil geöffnet und oberhalb des Beifahrers ein Plattenteil geschlossen ist. Hierfür können die Plattenteile an dem Längsträger 11 und dem hinteren Dachabschnitt 3 geführt sein, wobei die Führung auch nach Art eines Teleskopauszugs während der Bewegung variabel sein kann, so daß bei geschlossenen Plattenteilen kein Teil der Führung die Sicht durch die Heckscheibe 4 stört.

Für eine eventuell mögliche Verlagerung eines oder zweier Plattenteil(e) 7 unter die Heckscheibe 4 können auch seitlich außen liegende Bereiche des oder der Teil(e) 7 um Längsachsen abklappbar sein, wodurch diese in geschlossener Position eine größere Breite als während ihrer Öffnung aufweisen können und damit das Verschieben auch in einen schmaleren hinteren Dachabschnitt 3 erlauben.

Die Erfindung ist sowohl bei Fahrzeugen mit manuell zu bewegenden Dachteilen 3, 6, 7 als auch bei voll- oder teilautomatischer Beweglichkeit der Teile anwendbar. Je nach Übergabemechanismus der hinteren Halterungen 16 an den hinteren Dachabschnitt 3 kann es möglich sein, das Dach 2 nicht nur bei geöffnetem, sondern auch bei geschlossenem öffnungsfähigen Teil 7 insgesamt zu öffnen.

## Patentansprüche

1. Cabriolet-Fahrzeug (1) mit zumindest zwei in geschlossener Dachstellung bezüglich der Fahrtrichtung (F) aufeinander folgenden Dachabschnitten (3;6), von denen bei geschlossenem hinterem Dachabschnitt (3) zumindest ein separat öffnungsfähiger Teil (7) des oder eines diesem vorgeordneten vorderen Dachabschnitts (6) mit einer heckwärts weisenden Komponente verlagerbar ist und in dieser verlagerten Stellung ein Fahrzustand des Cabriolet-Fahrzeugs (1) gebildet ist, wobei der oder jeder separat öffnungsfähige Teil (7) sich in seiner geschlossenen Stellung in Fahrzeugquerrichtung (q) bis zur Außenkante des jeweiligen Dachabschnitts (6) erstreckt und an zumindest einem im Bereich seiner vertikalen Fahrzeuglängsmittelebene (E) und zwischen einem Windschutzscheibenrahmen (10) und einem hinteren Dachabschnitt gelegenen Längsträger abgestützt ist,
**dadurch gekennzeichnet,**
**daß** der hintere Dachabschnitt (3) in nach hinten verlagertem Zustand des oder der vorderen Teil(e) (7) öffnungsfähig und in der Karosserie ablegbar ist.

2. Cabriolet-Fahrzeug. (1) nach Anspruch 1
**dadurch gekennzeichnet,**
**daß** der oder jeder öffnungsfähige Teil (7) in seinem geschlossenen Zustand mit seinem vorderen Ende (13) an dem zumindest einen Längsträger (11) und mit seinem hinteren Ende (15) über zumindest ein seiner Außenkante nahegelegene Halterung (16) an einem dahinter liegenden Dachabschnitt (3) beweglich abgestützt ist.

3. Cabriolet-Fahrzeug (1) nach einem der Ansprüche 1 oder 2,
**dadurch gekennzeichnet,**
**daß** der oder jeder separat öffnungsfähige Teil (7) in einer ersten Phase seiner Öffnungsbewegung mit seinem vorderen Ende (13) an dem Längsträger (11) geführt (14) und in vollständig offener Stellung an einen dahinter liegenden Dachabschnitt (3) übergeben ist.

4. Cabriolet-Fahrzeug (1) nach einem der Ansprüche 1 bis 3,
**dadurch gekennzeichnet,**
**daß** der öffnungsfähige Teil (7) sich über die gesamte Innenraumbreite erstreckt und in seiner geschlossenen Stellung den Längsträger (11) übergreift.

5. Cabriolet-Fahrzeug (1) nach einem der Ansprüche 1 bis 3,
**dadurch gekennzeichnet,**
**daß** zwei öffnungsfähige Teile nebeneinander und von dem Längsträger (11) getrennt vorgesehen sind.

6. Cabriolet-Fahrzeug (1) nach Anspruch 5,
**dadurch gekennzeichnet,**
**daß** der oder die separat öffnungsfähige(n) Teil(e) (7) als zumindest im wesentlichen transparente Plattenkörper ausgebildet ist oder sind.

7. Cabriolet-Fahrzeug (1) nach einem der Ansprüche 1 bis 6,
**dadurch gekennzeichnet,**
**daß** während der Öffnung des gesamten Daches (2) zur Ablage im rückwärtigen Teil des Cabriolet-Fahrzeugs (1) der Längsträger (11) gegenüber einem dahinter liegenden Dachabschnitt (3) um eine quer zum Fahrzeug gelegene Achse (12) einschwenkbar ist.

8. Cabriolet-Fahrzeug (1) nach Anspruch 7,
**dadurch gekennzeichnet,**
**daß** das Dach (2) genau zwei aufeinander folgende Dachabschnitte (3;6) umfaßt und die Längserstreckung des Längsträgers (11) kleiner ist als die Höhenerstreckung des hinteren Dachteils (3).

9. Cabriolet-Fahrzeug (1) nach einem der Ansprüche 7 oder 8,
**dadurch gekennzeichnet,**
**daß** das Dach (2) sowohl bei geöffnetem als auch bei geschlossenem öffnungsfähigem Teil (7) insgesamt geöffnet werden kann.

## Claims

1. A cabriolet vehicle (1) with at least two roof sections (3; 6) which, in the closed roof position, follow one another relative to the direction of travel (F) and of which, when the rear roof section (3) is closed, at least one separately openable part (7) of the or of a front roof section (6) arranged in front of this is displaceable with a rearwardly directed component, and in this displaced position a driving state of the cabriolet vehicle (1) is formed, wherein the or each separately openable part (7) extends in its closed position in the vehicle transverse direction (q) up to the outer edge of the respective roof section (6) and is supported on at least one longitudinal beam situated in the area of its vertical vehicle longitudinal midplane (E) and between a windscreen frame (10) and a rear roof section,
**characterised in that**
when the front part(s) (7) is or are in the rearwardly displaced state, the rear roof section (3), is openable and able to be stored in the car body.

2. The cabriolet vehicle (1) according to Claim 1,
**characterised in that**
the or each openable part (7), in its closed state, is movably supported by its front end (13) on the at least one longitudinal beam (11) and by its rear end (15) via at least one bracket (16), which is proximate to its outer edge, on a roof section (3) which lies behind it.

3. The cabriolet vehicle (1) according to one of Claims 1 or 2,
**characterised in that**
the or each separately openable part (7) is guided (14) in a first phase of its opening movement by its front end (13) on the longitudinal beam (11) and, in the fully open position, is given over to a roof section (3) situated behind this.

4. The cabriolet vehicle (1) according to one of Claims 1 to 3,
**characterised in that**
the openable part (7) extends across the entire width of the interior and, in its closed position, overlaps the longitudinal beam (11).

5. The cabriolet vehicle (1) according to one of Claims 1 to 3,
**characterised in that**
two openable parts are provided next to one another and separated by the longitudinal beam (11).

6. The cabriolet vehicle (1) according to Claim 5,
**characterised in that**
the separately openable part(s) (7) is or are configured as at least substantially transparent plate bodies.

7. The cabriolet vehicle (1) according to one of Claims 1 to 6,
**characterised in that**
during opening of the entire roof (2) for storing in the rearward part of the cabriolet vehicle (1), the longitudinal beam (11) is able to be pivoted in, relative to a roof section (3) which lies behind it, about an axis (12) which is situated transverse to the vehicle.

8. The cabriolet vehicle (1) according to Claim 7,
**characterised in that**
the roof (2) includes precisely two roof sections (3; 6) which follow one another, and the longitudinal extension of the longitudinal beam (11) is smaller than the height extension of the rear roof part (3).

9. The cabriolet vehicle (1) according to one of Claims 7 or 8,
**characterised in that**
the roof (2) can be opened as a whole both when the openable part (7) is opened and when it is closed.

## Revendications

1. Véhicule cabriolet (1) comprenant au moins deux sections de toit (3 ; 6) consécutives par rapport au sens de la marche (F) en position de fermeture du toit, à partir desquelles, en position de fermeture de la section de toit (3) arrière, au moins un élément (7), pouvant s'ouvrir séparément, de la section ou d'une section de toit (6) avant disposée en amont de celui-ci peut être déplacé avec une composante orientée vers l'arrière et à partir desquelles, dans cette position déplacée, un état de marche du véhicule cabriolet (1) est établi, l'élément ou chaque élément (7) pouvant s'ouvrir séparément s'étendant, dans sa position fermée, dans le sens transversal du véhicule (q) jusqu'au bord extérieur de la section de toit (6) respective et étant soutenu sur au moins un longeron prévu dans la zone du plan médian longitudinal et vertical du véhicule (E) et situé entre un cadre de pare-brise (10) et une section de toit arrière,
**caractérisé en ce que**,
la section de toit (3) arrière peut s'ouvrir dans un état déplacé vers l'arrière de l'élément ou des éléments (7) avant et peut être déposée dans la carrosserie.

2. Véhicule cabriolet (1) selon la revendication 1,
**caractérisé en ce que**,
à l'état fermé, l'élément ou chaque élément (7) pouvant s'ouvrir est soutenu de façon mobile par son extrémité avant (13) sur au moins un longeron (11) et, par son extrémité arrière (15), sur une section de toit (3) située derrière, par l'intermédiaire d'au moins un support (16) proche de son bord extérieur.

3. Véhicule cabriolet (1) selon l'une des revendications 1 ou 2,
**caractérisé en ce que**,
dans une première phase de son mouvement d'ouverture, l'élément ou chaque élément (7) pouvant s'ouvrir séparément est guidé par son extrémité avant (13) sur le longeron (11) et, en position d'ouverture complète, est transféré sur une section de toit (3) située derrière.

4. Véhicule cabriolet (1) selon l'une des revendications 1 à 3,
**caractérisé en ce que**
l'élément (7) pouvant s'ouvrir s'étend sur toute la largeur intérieure et, dans sa position de fermeture, chevauche le longeron (11).

5. Véhicule cabriolet (1) selon l'une des revendications 1 à 3,
**caractérisé en ce que** deux éléments pouvant s'ouvrir sont prévus de façon à être juxtaposés et séparés du longeron (11)

6. Véhicule cabriolet (1) selon la revendication 5,
**caractérisé en ce que**
l'élément ou les éléments (7) pouvant s'ouvrir séparément est ou sont réalisé(s) sous forme de corps de panneau au moins substantiellement transparents.

7. Véhicule cabriolet (1) selon l'une des revendications 1 à 6,
**caractérisé en ce que**,
pendant l'ouverture de tout le toit (2), pour le dépôt dans la partie arrière du véhicule cabriolet (1), le longeron (11) peut être pivoté autour d'un axe (12) disposé transversalement au véhicule, par rapport à une section de toit (3) située derrière.

8. Véhicule cabriolet (1) selon la revendication 7,
**caractérisé en ce que**
le toit (2) comprend précisément deux sections de toit (3 ; 6) consécutives et **en ce que** l'extension longitudinale du longeron (11) est plus petite que l'extension en hauteur de la section de toit (3) arrière.

9. Véhicule cabriolet (1) selon l'une des revendications 7 ou 8,
**caractérisé en ce que**
le toit (2) peut être ouvert entièrement, que l'élément (7) pouvant s'ouvrir soit ouvert ou fermé.
